# EUROPÄISCHE PATENTSCHRIFT

(11) **EP 2 158 622 B1**
(45) Veröffentlichungstag und Bekanntmachung des Hinweises auf die Patenterteilung: **26.09.2012**
(21) Anmeldenummer: 08736482.4
(22) Anmeldetag: 23.04.2008
(51) Int. Cl.: H02N 2/10

(54) **ELEKTROMECHANISCHER MOTOR, INSBESONDERE PIEZOELEKTRISCHER MIKROSCHRITTANTRIEB**
ELECTROMECHANICAL MOTOR ESPECIALLY PIEZOELECTRIC MICROSTEPPER MOTOR
MOTEUR ÉLECTROMÉCANIQUE, NOTAMMENT MOTEUR PAS À PAS PIÉZOÉLECTRIQUE

(30) Priorität: 18.05.2007 DE 102007023201
(43) Veröffentlichungstag der Anmeldung: 03.03.2010
(73) Patentinhaber: Continental Automotive GmbH, 30165 Hannover (DE)
(72) Erfinder: BLUME, Heinrich-Jochen, 64291 Darmstadt (DE); GOTTLIEB, Bernhard, 81739 München (DE); KAPPEL, Andreas, 85649 Brunnthal (DE); KISSEL, Robert Wolfgang, 63329 Egelsbach (DE); MITTENBÜHLER, Karl-Heinz, 64347 Griesheim (DE); SCHWEBEL, Tim, 80337 München (DE); WALLENHAUER, Carsten, 01987 Schwarzheide (DE)
(86) Internationale Anmeldenummer: PCT/EP2008/054900
(87) Internationale Veröffentlichungsnummer: WO 2008/141884

(56) Entgegenhaltungen:
- WO-A-2007/031431
- US-A- 4 757 223
- US-A- 5 079 471

## Beschreibung

Die vorliegende Erfindung betrifft einen elektromechanischen Motor, insbesondere einen piezoelektrischen Stellantrieb.

Das Cockpit eines Kraftfahrzeugs versucht ein optimales Zusammenspiel von Design und Technik zu realisieren. Im Blickfeld des Fahrers liegen dabei verschiedene Zeigerinstrumente. Diese Zeigerinstrumente müssen sowohl unterschiedlichen technischen Anforderungen genügen als auch einen konkurrenzfähigen Preis für die Massenproduktion von Kraftfahrzeugen besitzen. Ein Beispiel für ein derartiges Zeigerinstrument ist das "Messwerk 2000" der Firma Siemens VDO.

Das "Messwerk 2000" basiert auf einem mit einem einstufigen Schneckenradgetriebe untersetzten Schrittmotorantrieb. Der vierpolige Schrittmotor wird durch zwei um 90° im Phasenwinkel zueinander phasenverschobene sinusartige Spulenstromverläufe als Funktion der Zeit angesteuert. Das Vorzeichen der Phasenverschiebung bestimmt die Drehrichtung und die Frequenz die Drehgeschwindigkeit der Motorwelle. Im Rahmen einer vollen Periode von 360° der sinusartigen Stromverläufe können bis zu 128 Zwischenstufen reproduzierbar eingestellt werden. Die Nutzung dieser Zwischenstufen wird als Mikroschrittbetrieb bezeichnet.

Ein kompletter Stellantrieb "Messwerk 2000", der den oben charakterisierten Schrittmotor beinhaltet, besteht aus zwölf Einzelteilen. Der Schrittmotor selbst setzt sich aus zwei Spulen mit einem gemeinsamen Statorblech und einem Permanentmagnetrotor zusammen. Hinsichtlich der Bauteilkosten schlagen die Spulen und der Permanentmagnet am stärksten zu Buche. Entscheidend für den Preis sind neben den Materialkosten ebenfalls die Herstellungskosten, die näherungsweise proportional zur Anzahl der Komponenten des Stellantriebs zunehmen.

Aus der EP 1 098 429 B1 ist ein nach einem neuen Motorprinzip, das heißt ohne rotierende Spulen, arbeitender elektromechanischer Motor bekannt, bei dem während des Betriebs durch eine zeitlich versetzte Betätigung von mindestens zwei elektromechanischen Antriebselementen ein Antriebsring umlaufend verschoben wird, so dass durch einen unmittelbaren Kraftübertrag vom Antriebsring auf die - insbesondere innerhalb des Antriebsrings befindliche - Welle diese gedreht wird. Die umlaufenden Verschiebebewegungen des Antriebsrings können durch einen z. B. piezoelektrisch, magnetostriktiv, elektrostriktiv oder elektrodynamisch angetriebenen Aktor hervorgerufen werden, so dass ein hinsichtlich der Materialkosten und Herstellungskosten besser für die Massenproduktion geeigneter Stellantrieb resultiert. Die Piezoaktoren werden so am Antriebsring angebracht, dass ihr jeweiliger Hub radial auf den Antriebsring wirkt, wobei gegebenenfalls noch weitere Maßnahmen ergriffen werden, um eine möglichst symmetrische Krafteinleitung auf den Antriebsring zu erreichen.

Unter den zuletzt genannten technischen Umständen ergibt sich zwar ein hinsichtlich der Funktion optimierter Antrieb mit besten Gleichlaufeigenschaften (Konstanz der Drehgeschwindigkeit unabhängig von der momentanen Stellung der Welle) ohne Drehmomentschwankungen. Insbesondere die Längserstreckung und die radiale Anordnung der Biegeaktoren bringt es dabei jedoch mit sich, dass die ebenen Antriebsvarianten einen erheblichen Platzbedarf in der Ebene erfordern und zumeist wenig kompakt erscheinen. Kompakte ebene Antriebe werden aber aufgrund der in Cockpitinstrumenten vorgegebenen sehr beengten Bauraumverhältnisse dringend benötigt.

Die US 5,079,471 A beschreibt einen elektromechanischen Motor mit den Merkmalen des Oberbegriffs des Patentanspruchs 1. Er weist eine große Anzahl von einzelnen Bauteilen auf, die aufwändig zusammengebaut werden müssen.

Die Aufgabe der vorliegenden Erfindung besteht darin, einen hinsichtlich Teilezahl, Fertigungsaufwand, Bauraumbedarf und Funktionalität optimierten Schrittantrieb, insbesondere einen Kleinststellantrieb für Messwerke von Cockpitinstrumenten, bereitzustellen.

Diese Ausgabe wird durch einen elektromechanischen Motor, insbesondere einen piezoelektrischen Mikroschrittmotor, gemäß Patentanspruch 1 gelöst. Vorteilhafte Ausgestaltungen und Weiterentwicklungen der vorliegenden Erfindung gehen aus der folgenden Beschreibung, den Zeichnungen und den abhängigen Ansprüchen hervor.

Der erfindungsgemäße elektromechanische Schrittantrieb weist die Merkmale von Anspruch 1 auf.

Aufgrund der scherflexiblen aber torsionssteifen quadratischen Rahmenstruktur braucht erfindungsgemäß, im Gegensatz zum Stand der Technik, nicht mehr auf die radiale Krafteinleitung der durch die Biegeaktoren bereitgestellten Kräfte in den Antriebsring bezüglich des Mittelpunktes der Ringbohrung geachtet werden, da das durch eine nichtradiale, exzentrische Krafteinleitung hervorgerufene Drehmoment auf den Antriebsring durch die scherflexible Rahmenstruktur und deren Fixierung an einer ihrer Ecken, beispielsweise in einem Gehäuse, im Wesentlichen torsionsfrei aufgenommen wird. Dies eröffnet die Möglichkeit einer platzsparenden Anordnung der Antriebselemente, insbesondere entlang der Außen- oder Innenseiten der quadratischen Rahmenstruktur. Dadurch ist ein sehr kompakter, bauraumsparender Aufbau des Schrittantriebes realisierbar. Je nach vorgegebener Dimensionierung der Antriebselemente lassen sich längere Antriebselemente vorteilhaft entlang der Außenseiten und kürzere entlang der Innenseiten, also im Innenraum, der quadratischen Rahmenstruktur anordnen. Der erfindungsgemäße Schrittantrieb zeichnet sich weiterhin durch eine sehr geringe Anzahl von einfachen Bauteilen aus, so dass der für die Massenproduktion besonders geeignet ist. Ferner wird eine aufgrund unterschiedlicher Wärmedehnung von Kunststoff und Aktor auftretende thermische Verstimmung des Antriebs konstruktiv sicher abgefangen. Durch Formschluss, z. B. mittels einer zwischen Antriebsring und Welle ausgebildeten Verzahnung, wird eine sehr hohe Stellgenauigkeit des erfindungsgemäßen Antriebs im rein gesteuerten Betrieb erreicht, ohne Sensoren und einen Regelkreis in Anspruch nehmen zu müssen.

Darüber hinaus ergibt sich aus der scherflexiblen Anlenkung der beiden elektromechanischen, vorzugsweise piezoelektrischen, Antriebselemente der Vorteil, dass ihre Bewegungsrichtungen entkoppelt voneinander sind, so dass sich die Antriebselemente in ihrer Bewegung nicht oder vernachlässigbar gering behindern. Es treten also, aufgrund der Flexstruktur des quadratischen Rahmens, bei der Krafteinleitung keine Verlustenergien auf.

Erfindungsgemäß wird - zugunsten der Optimierung der Kompaktheit - keine unbedingt vollkommene symmetrische Krafteinleitung auf den Antriebsring angestrebt. Die sich hinsichtlich der Funktion daraus gegebenenfalls ergebenden Konsequenzen, z. B. leichte Gleichlauf- und Drehmomentschwankungen, können durch weitere Maßnahmen soweit reduziert werden, dass die Kundenspezifikationen weiterhin eingehalten werden. Insbesondere können kleine Drehmomente durch eine den reinen Sinusverlauf modulierende Ansteuerung der Antriebselemente ausgeglichen werden.

Erfindungsgemäß besteht die quadratische Rahmenstruktur aus vier annähernd in den Ecken eines Quadrates angeordneten Eckelementen, die jeweils durch ein Paar annähernd paralleler Stabelemente miteinander verbunden sind, wobei die Anbindung der Stabelemente an die Eckelemente jeweils durch ein Festkörpergelenk erfolgt, und wobei ein Eckelement steif mit dem Antriebsring verbunden ist. Die paarweise in etwa parallele Anordnung der Stabelemente in Kombination mit ihrer Anbindung an die Eckelemente durch Festkörpergelenke hat zur Folge, dass die daraus gebildete in etwa quadratische Rahmenstruktur leicht (d. h. nahezu kräftefrei) in jede Richtung der Ebene in Form einer Scherung verformt werden kann. Einer Torsion zweier beliebiger Eckelemente relativ zueinander hingegen setzt die so ausgebildete quadratische Rahmenstruktur hohen Widerstand entgegen. Wird ein Eckelement fixiert, z. B. in einem Gehäuse, lässt sich das gegenüberliegende Eckelement relativ dazu in der Ebene verschieben aber nicht rotieren. Daher wird der Antriebsring steif mit diesem translatierbaren Eckelement verbunden. Der Antriebsring ist dadurch ebenfalls leicht verschiebbar aber nicht rotierbar. Jedes an ihm angreifende Drehmoment wird durch die im Wesentliche torsionssteife Rahmenstruktur aufgenommen und an das fixierte Eckelement bzw. an das Gehäuse abgeleitet, ohne dass dabei der Antriebsring nennenswert rotiert wird.

Die Festkörpergelenke können jeweils durch eine Verjüngung des Querschnittes der Stabelemente in einem kurzen Abschnitt gebildet sein, was insbesondere fertigungstechnisch von Vorteil ist. Diese Ausführungsform kann noch vorteilhafter, nämlich mit deutlich größerer Torsionssteifigkeit der quadratischen Rahmenstruktur insgesamt ausgestaltet werden. Dazu ist bei mindestens einem Paar von Querschnittsverjüngungen, die dem gleichen Paar von Stabelementen und dem gleichen Eckelement zugeordnet sind, mindestens eine der Querschnittsverjüngungen des Paares in der Weise versetzt zur Mittelachse des jeweiligen Stabelements ausgebildet, dass der Abstand der durch die beiden des Paares gebildeten Drehpunkte gegenüber dem Abstand bei jeweils mittig angeordneten Querschnittsverjüngungen vergrößert ist.

Wenn die Krafteinleitung nicht durch Biegeaktoren erfolgen soll, ist eine Ausführungsform vorteilhaft, bei der das bewegte Ende je eines elektromechanischen Antriebselementes an je einem Nachbar-Eckelement des mit dem Antriebsring verbundenen Eckelementes angreift.

Wenn andererseits die Krafteinleitung mit Biegeaktoren erfolgen soll, so ist eine Ausführungsform von besonderem Vorteil, bei der am mit dem Antriebsring verbundenen Eckelement zwei annähernd senkrecht zueinander angeordnete Zug-Druckstäbe angebunden sind, die außerhalb oder innerhalb der quadratischen Rahmenstruktur und parallel zu den jeweiligen, am genannten Eckelement angebundenen, Stabelementen verlaufend sich mit ihren freien Enden jeweils mindestens bis in den Bereich des zugehörigen Nachbar-Eckelementes des mit dem Antriebsring verbundenen Eckelementes erstrecken, wobei das bewegte Ende je eines elektromechanischen Antriebselementes am freien Ende je eines Zug-Druckstabes angreift. Gemäß einer Weiterbildung können ferner die Zug-Druckstäbe jeweils zu ihren beiden Enden hin jeweils ein Festkörpergelenk aufweisen.

Die zwei elektromechanischen Antriebselemente können besonders vorteilhaft als Biegewandler, vorzugsweise piezoelektrische Biegewandler, ausgestaltet sein.

Derartige Festkörper-Biegeaktoren auf Basis piezoelektrischer Keramikwerkstoffe werden in verschiedenartigen Bauformen seit vielen Jahren vielseitig in der Industrie eingesetzt. Sie zeichnen sich durch eine kleine Bauform, einen niedrigen Energiebedarf und eine hohe Zuverlässigkeit aus. So zeigt beispielsweise ein piezoelektrischer Biegeaktor eine Lebensdauer von mindestens 10⁹ Zyklen im industriellen Umfeld.

Eine besonders kompakte Variante des erfindungsgemäßen Schrittantriebs ergibt sich durch Anordnung der zwei Biegewandler außerhalb oder innerhalb und annähernd parallel zu jenen zwei Seiten der quadratischen Rahmenstruktur, die dem mit dem Antriebsring verbundenen Eckelement gegenüberliegen, wobei die Biegewandler jeweils mit ihrem bewegten Ende an das jeweilige Nachbar-Eckelement des mit dem Antriebsring verbundenen Eckelementes, oder am freien Ende des jeweiligen Zug-Druckstabes angreifen.

Bei einer Weiterbildung der letztgenannten Ausführungsform ist das dem mit dem Antriebsring verbundenen Eckelement gegenüberliegende Eckelement an einem Gehäuse fixiert und weist zwei Aufnahmen auf, die jeweils zur steifen Befestigung eines Biegewandlers an seinem ruhenden Ende vorgesehen sind. Bei dieser bevorzugten Ausführungsform der vorliegenden Erfindung werden die im Wesentlichen streifenförmigen Biegewandler an einem Ende mechanisch steif eingespannt oder befestigt. An diesem Ende wird auch bevorzugt die elektrische Kontaktierung der Biegewandler vorgenommen. Am entgegengesetzten, bewegten Ende wird entsprechend der elektrischen Ansteuerung des Biegewandlers eine Auslenkung in seine Wirkrichtung erzielt. Die in einem Kleinstellantrieb für beispielsweise Zeigerinstrumente zum Einsatz kommenden Biegewandler werden typischerweise so dimensioniert, dass sie an ihrem bewegten Ende eine freie Auslenkung im Bereich von ca. 0,2 mm bis 2 mm aufweisen. Zudem wird im Fall der Auslenkungsblockierung des frei bewegbaren Endes des Biegewandlers eine Blockierkraft im Bereich von 0,5 N bis 2 N erreicht. Die näherungsweise geradlinige Auslenkung der Biegewandler erfolgt jeweils transversal bezogen auf ihre größte Längserstreckung. Die Richtung der Auslenkung, die der Wirkrichtung des Biegewandlers entspricht, ist somit annähernd orthogonal zur Längsachse des Biegewandlers.

Bei allen Varianten der Erfindung ist es vorteilhaft, die quadratische Rahmenstruktur und den Antriebsring gemeinsam als einstückig in Kunststoffspritzgusstechnik gefertigtes Antriebsmodul auszubilden, wobei die Biegewandler mit in das Antriebsmodul eingespritzt sind. Die Realisierung des Antriebsmoduls in Kunststoffspritzgusstechnik ist einfach und kostengünstig, wobei durch die Einbeziehung der Biegeaktoren in den Einspritz-Arbeitsgang die Anzahl der Fertigungsschritte noch weiter reduziert wird.

Zur steifen Lagerung des Antriebsmoduls bzw. zur drehbaren Lagerung der zugehörigen Welle ist es vorteilhaft, ein annähernd quaderförmiges Gehäuse mit einem Deckel vorzusehen, wobei im Gehäuse ein zentraler Lagerblock mit einer Anlagefläche und mit einer ersten Lagerbohrung und im Deckel eine zweite Lagerbohrung für die Welle vorgesehen ist, und wobei ein zur Fixierung vorgesehenes Eckelement der quadratischen Rahmenstruktur derart in einer Gehäuseecke angeordnet und steif und dauerfest fixiert ist, dass die mindestens eine zylindrische Abrollfläche der Welle in einer zugehörigen Abrollfläche einer Ringbohrung des Antriebsringes abrollen kann.

Die bevorzugten Ausführungsformen der vorliegenden Erfindung werden unter Bezugnahme auf die begleitende Zeichnung näher erläutert. Es zeigen:
Fig. 1 A und 1B eine Ausführungsform eines aus quaderförmiger Rahmenstruktur und Antriebsring gebildeten Antriebsmoduls für den erfindungsgemäßen Schrittantrieb jeweils in Draufsicht bzw. in perspektivischer Ansicht,
Fig. 2 A und 2B, jeweils in gleicher Ansicht wie Fig. 1, das dortige Antriebsmodul, jedoch mit eingesetzten Biegeaktoren,
Fig. 3 A und 3B, jeweils in gleicher Ansicht wie Fig. 1, ein Gehause zur Lagerung der Welle und des Antriebsmoduls,
Fig. 4 und 4B, jeweils in gleicher Ansicht wie Fig. 1, einen zum Gehause gemäß Figur 3 passenden Deckel,
Fig. 5 A und 5B, jeweils in gleicher Ansicht wie Fig. 1, einen Teilzusammenbau des erfindungsgemäßen Schrittantriebs,
Fig. 6 eine perspektivische Ansicht einer Bügelfeder,
Fig. 7 eine Welle für den erfindungsgemäßen Schrittantrieb,
Fig. 8 einen axialen Querschnitt entlang der z-Achse durch den Antrieb im zusammengebauten Zustand,
Fig. 9 A und 9B, jeweils in gleicher Ansicht wie Fig. 1, eine weitere Ausführungsform eines Antriebsmoduls für den erfindungsgemäßen Schrittantrieb,
Fig. 10 A und 10B, jeweils in gleicher Ansicht wie Fig. 1, eine weitere Ausführungsform eines erfindungsgemäßen Antriebsmoduls mit innerhalb der quadratischen Rahmenstruktur anordenbaren Biegewandlern.

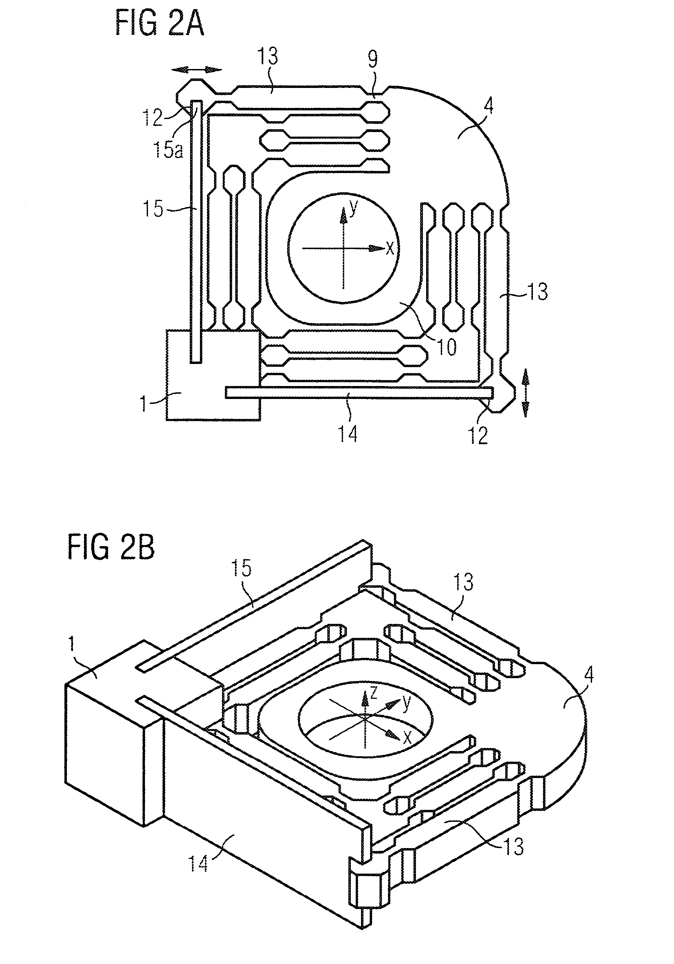

Erfindungsgemäß wird ein piezoelektrischer Schrittmotor vorgestellt, der es erlaubt, durch eine Überlagerung geeigneter periodischer Linearbewegungen der Biegewandler eine kontinuierliche und gleichförmige Rotation zu erzeugen. Zu diesem Zweck werden die Biegewandler 14, 15, vgl. Figur 2, mittels einer scherflexiblen quadratischen Rahmenstruktur 31 derart an einen flachen Antriebsring 10 angekoppelt, dass dieser entlang der zueinander senkrechten Wirkrichtungen x und y (vgl. Figur 2) der Biegewandler 14, 15 translatierbar ist. Der quadratische Rahmen 31 zusammen mit dem Antriebsring 10 und, gegebenenfalls, den integrierten Biegewandlern 14, 15, wird im Folgenden als 'Antriebsmodul' bezeichnet. Das Antriebsmodul ist mit Hilfe einer Spritzgusstechnik aus Polyethylen, Spritzguss-Kunststoff, POM oder aus anderen geeigneten Werkstoffen herstellbar.

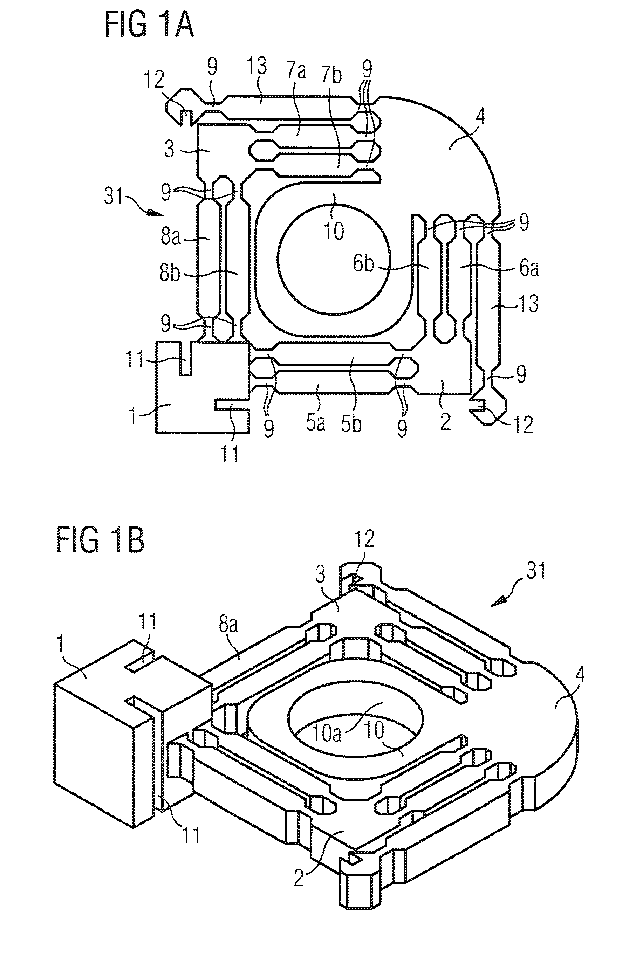

Figur 1 zeigt das Antriebsmodul in der Draufsicht und in der Perspektive. Es besteht aus vier ungefähr in den Ecken eines Quadrates angeordneten Eckelementen 1, 2, 3, 4, die mit vier Paaren von Stabelementen 5a, 5b, 6a, 6b, 7a, 7b, 8a, 8b miteinander verbunden sind und zusammen mit den Eckelementen 1, 2, 3, 4 in etwa einen quadratischen Rahmen 31 bilden.

Die Anbindung der Stabelemente 5a, 5b, 6a, 6b, 7a, 7b, 8a, 8b an die Eckelemente 1, 2, 3, 4 erfolgt mittels sogenannter Festkörpergelenke 9. Festkörpergelenke ermöglichen, wie gewöhnliche Gelenke (allerdings nur innerhalb eines begrenzten Winkelbereiches) eine nahezu ungehinderte Rotation der angeschlossenen Elemente relativ zueinander. Ihre Funktion basiert auf dem Biegeprinzip. Erreicht wird die lokale Biegung, wie in Figur 1 deutlich erkennbar, durch eine gezielte Verringerung des Stabquerschnittes in einem kurzen Abschnitt. Der reduzierte Stabquerschnitt führt zu einer stark reduzierten Biegesteifigkeit. Da die Querschnittsverjüngung sehr lokalisiert ist, wird die axiale Federrate (Steifigkeit) des Stabes aber kaum verringert.

Die paarweise in etwa parallele Anordnung der Stabelemente 5a, 5b, 6a, 6b, 7a, 7b, 8a, 8b in Kombination mit ihrer Anbindung an die Eckelemente 1, 2, 3, 4 durch Festkörpergelenke 9 hat zur Folge, dass die daraus gebildete, in etwa quadratische Rahmenstruktur 31 leicht (d. h. nahezu kräftefrei) in jede Richtung der Ebene in Form einer Scherung verformt werden kann. Einer Torsion zweier beliebiger Eckelemente relativ zueinander hingegen setzt die Rahmenstruktur 31 hohen Widerstand entgegen.

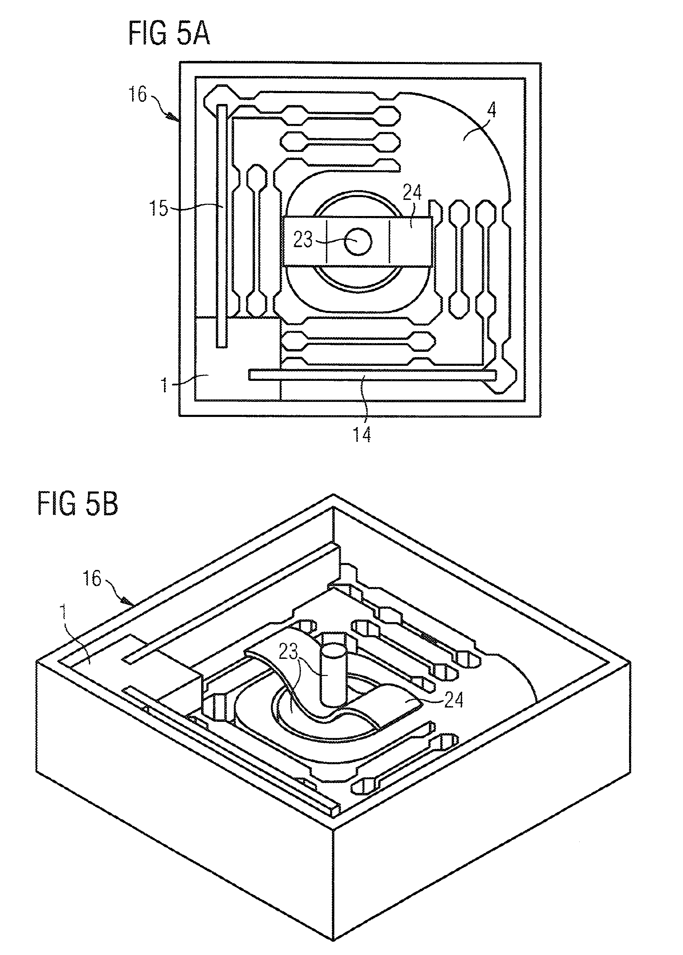

Wird beispielshalber das Eckelement 1 (wie später im Zusammenhang mit Figur 5 beschrieben) fixiert, lässt sich Eckelement 4 relativ dazu in der Ebene verschieben aber nicht rotieren. Daher wird der Antriebsring 10 steif mit dem Eckelement 4 verbunden. Der Antriebsring 10 ist leicht verschiebbar, aber nicht rotierbar. Jedes am Antriebsring 10 angreifende Drehmoment wird durch die torsionssteife Rahmenstruktur 31 aufgenommen und an die Fixierung des Eckelementes 1 abgeleitet, ohne dass dabei der Antriebsring 10 nennenswert rotiert wird.

Infolgedessen muss erfindungsgemäß nicht mehr auf die radiale Krafteinleitung der durch die Biegeaktoren 14, 15 bereitgestellten Kräfte in den Antriebsring 10 bezüglich des Mittelpunktes der Ringbohrung 10a, vgl. Figur 1B, geachtet werden, da das durch eine nichtradiale Krafteinleitung hervorgerufene Drehmoment auf den Antriebsring 10 durch die Rahmenstruktur 31 und die Fixierung des Eckelementes 1 im Wesentlichen torsionsfrei aufgenommen wird.

Das fixierte Eckelement 1 enthält Aufnahmen 11 zur steifen Befestigung zweier (erst in Figur 2 dargestellten) Biegeaktoren 14, 15 an ihrem ruhenden Ende. Zusätzlich können in den Aufnahmen 11 hier nicht gezeigte Maßnahmen vorgesehen sein, die dem elektrischen Anschluss der Biegeaktoren dienen, z. B. durch Druckkontaktstift, Klemmkontakt oder Bügelfederkontakt. Optional können die Biegeaktoren 14, 15 auch an ihrem entgegengesetzten bewegten Ende bzw. Bereich elektrisch kontaktiert werden.

Die bewegten Enden 15a, vgl. Figur 2A, der Biegeaktoren 14, 15 werden im Ausführungsbeispiel gemäß Figur 1 in jeweils einem Aufnahmekörper 12 gehalten, von dem aus dessen Antriebsbewegung bzw. dessen Antriebskraft via jeweils eines Zug-Druckstabes 13 auf das Eckelement 4 und somit auf den Antriebsring 10 vermittelt wird. Die Zug-Druckstäbe 13 sind ebenfalls mittels Festkörpergelenken 9, also scherflexibel, an das Eckelement 4 bzw. an die Aufnahmekörper 12 gekoppelt, damit die Biegeaktoren 14, 15 völlig unabhängig voneinander auf den Antriebsring 10 wirken können, bzw. nicht gegen die vergleichsweise hohe mechanische Steifigkeit des jeweils anderen Biegewandlers arbeiten müssen. Die Bewegungen der Biegewandler 14, 15 sind also entkoppelt.

Wird ein Biegeaktor 14, 15 elektrisch angesteuert, so biegt er sich näherungsweise in Form eines Kreisbogens, wodurch sich die Tangentensteigung der Biegelinie am bewegten Biegerende ändert. Diese Art der "Drehbewegung", wird durch die Festkörpergelenke 9 sicher abgefangen. Ebenso wird eine Änderung der Biegerlänge relativ zum Antriebsmodul (z. B. durch unterschiedliche thermische Dehnung der Rahmenstruktur 31 und des Biegermaterials) durch die Zug-Druckstabkopplung 13 mit Festkörpergelenken 9 sicher abgefangen, indem der Zug-Druckstab 13 minimal rotiert wird, ohne dass hierdurch die Funktion beeinträchtigt wird.

Figur 2 zeigt das Antriebsmodul mit den Biegeaktoren 14, 15, wobei die elektrische Kontaktierung der Biegeaktoren 14, 15 nicht dargestellt wurde. Mittels des Biegeaktors 14 kann eine Bewegung des Antriebsringes 10 in γ-Richtung und mittels des Biegeaktors 15 kann eine Bewegung des Antriebsringes 10 in x-Richtung relativ zum Eckelement 1 hervorgerufen werden. Die Auslenkung kann also jeweils, wie in Figur 2A angedeutet, in positiver oder negativer x- bzw. γ-Richtung erfolgen.

Zur Realisierung des mit dem Antriebsmodul verbundenen kinematischen Prinzips im Schrittmotor sind des Weiteren eine Welle und eine möglichst spielfreie, aber drehbare Lagerung derselben, sowie eine steife Lagerung des Antriebsmoduls erforderlich:

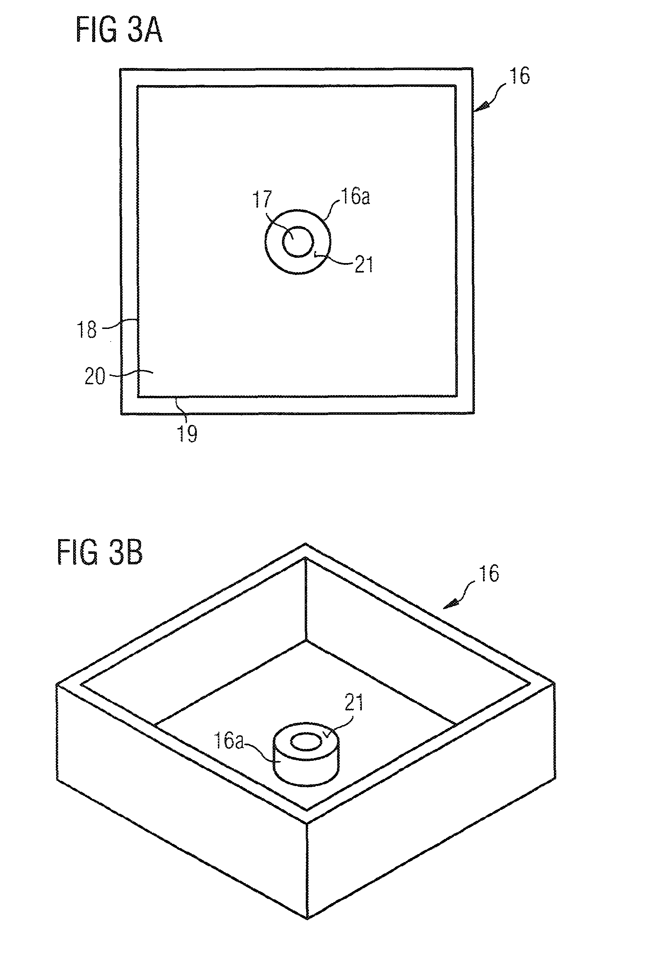

Figur 3 zeigt ein hierfür geeignetes näherungsweise quaderförmiges Gehäuse in der Draufsicht (Figur 3A) und in perspektivischer Ansicht (Figur 3B). Es enthält einen zentralen Lagerblock 16 mit einer zylindrischen Gleitlagerbohrung 17, die mit der zylindrischen Gleitfläche einer in ihr rotierenden Welle in Form einer engen Spielpassung gepaart ist. Die Kantenlängen zweier benachbarter Innenkanten, beispielsweise der Innenkanten 18, 19 und die Lage der Achse der Lagerbohrung 17 sind so bemessen, dass bei einer (steifen und dauerfesten) Fixierung des Eckelementes 1, z. B. in der Gehäuseecke 20, die Achse der Ringbohrung 10a des Antriebsringes 10 sich kongruent zur Achse der Lagerbohrung 17 einstellt. Die Anlagefläche 21 des Lagerblocks 16a ist derart lokalisiert, dass die Abrollfläche der Welle in z-Richtung (senkrecht zur Blattebene) in einer Höhe zu liegen kommt, die zur z-Position der Ringbohrung 10a korrespondiert, so dass die Welle bei geeigneter Ansteuerung der Biegeaktoren 14, 15 in der zylindrischen Innenfläche der Ringbohrung 10a abrollen kann.

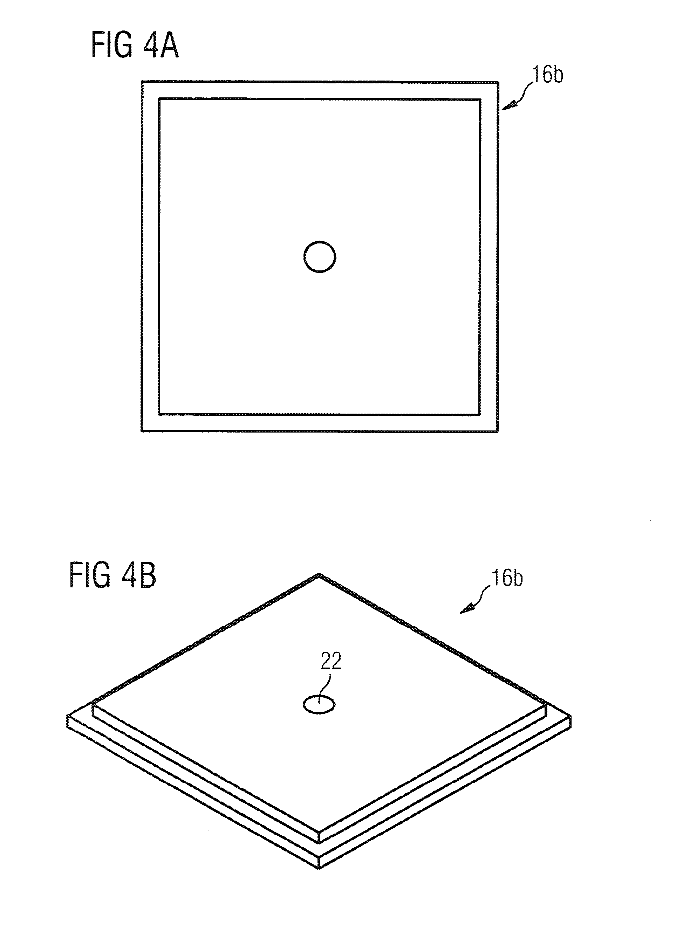

Figur 4 zeigt einen zum Gehäuse 16 passenden Deckel 16b mit einer zweiten Lagerbohrung 22, die zu einer zweiten zylindrischen Gleitfläche der Welle in Form einer drehbaren, aber engen Spielpassung gepaart ist, deren Bohrungsachse bei in das Gehäuse 16 eingesetztem Deckel 16b kongruent zur Achse der Ringbohrung 10a und der Achse der ersten Lagerbohrung 17 im Gehäuse 16 zu liegen kommt.

Figur 5 zeigt einen Teilzusammenbau des erfindungsgemäßen Schrittantriebs mit im Gehäuse 16 montierten Antriebsmodul, eingesetzten Biegeaktoren 14, 15, eingesetzter Welle 23 und eingesetzter Bügelfeder 24. Die Bügelfeder 24 stützt sich einerseits auf der Welle 23 und andererseits bei eingesetztem Deckel 16b auf einer Fläche des Deckels 16b mit hinreichender, aber geringer Kraft ab, um die Welle 23 auf Anlage mit der Fläche 21 des Lagerblocks 16a zu halten, ohne aber nennenswerte Reibungskräfte, die die Drehung der Welle 23 behindern zu verursachen. Auf diese Weise wird sichergestellt, dass die Abrollflächen von Antriebsring 10 und Welle 23 unter allen Betriebsbedingungen hinreichend genau in z-Richtung zueinander lokalisiert bleiben.

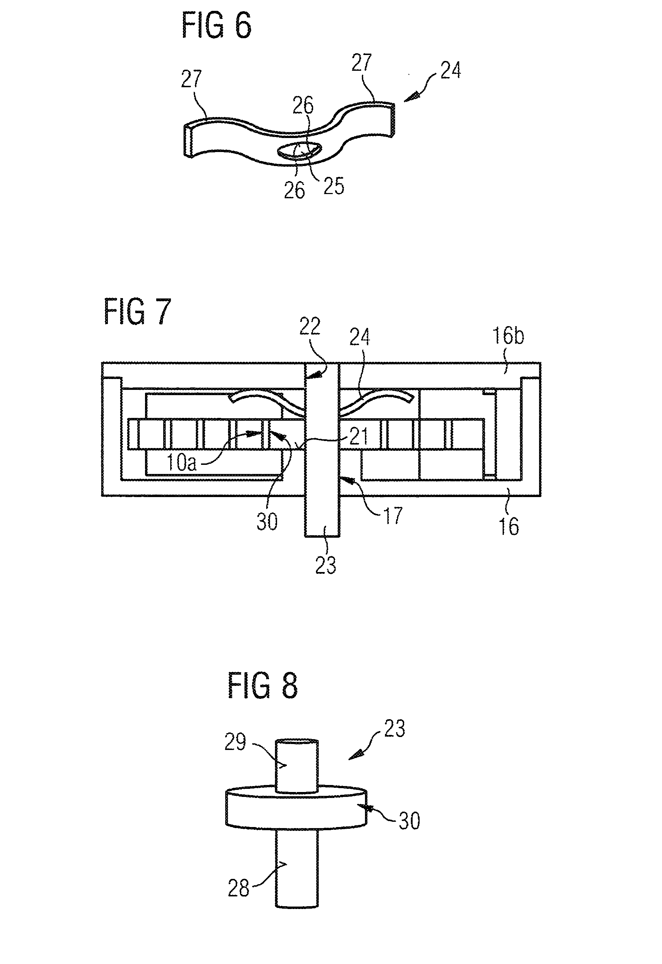

Figur 6 zeigt eine geeignete Bügelfeder 24. Die Bügelfeder 24 enthält eine Bohrung 25 zum Durchtritt der Wellenachse, wodurch ebenfalls sichergestellt wird, dass sie im Betrieb nicht 'Auswandern' kann. Die Bügelfeder 24 stützt sich über Flächen 26 nahe der Bohrungsachse in Form einer.Berührungslinie auf der Welle 23 ab, um ein durch Reibung erzeugtes Bremsdrehmoment auf die Welle 23 möglichst klein zu halten. Die weit außenliegenden Flächen 27 dienen zur Abstützung der Bügelfeder 24 auf einer Deckelfläche.

Figur 8 zeigt eine geeignete Welle 23. Sie besitzt zwei zylindrische Gleitlagerflächen 28, 29, die mit den zylindrischen Innenflächen der Lagerbohrungen 17, 22 gepaart sind, und mindestens eine zylindrische Abrollfläche 30, die mit mindestens einer Abrollfläche der Ringbohrung 10a gepaart ist. Hierbei dient die axiale Verlängerung der Fläche 28 zum Anschluss des jeweiligen, vom Schrittmotor anzutreibenden Elementes.

Figur 7 zeigt einen axialen Querschnitt entlang der z-Achse durch den erfindungsgemäßen Antrieb im zusammengebauten Zustand. Sie zeigt insbesondere die Lage seiner Bestandteile zueinander. Die Welle 23 ist an zwei Stellen in Form enger Spielpassungen anhand der Gleitflächenpaare 28, 17 und 29, 22 um die z-Achse reibungsarm drehbar, aber spielfrei gelagert. Eine geeignete Bügelfeder 24 hält im Zusammenwirken mit der Anlagefläche 21 die Welle 23 bezüglich der z-Richtung reibungsarm fixiert. Das Antriebsmodul hält im Ruhezustand die Abrollfläche der Ringbohrung 10a sowohl konzentrisch, als auch in z-Richtung in geeigneter Lage relativ zur Abrollfläche 30 der Welle 23.

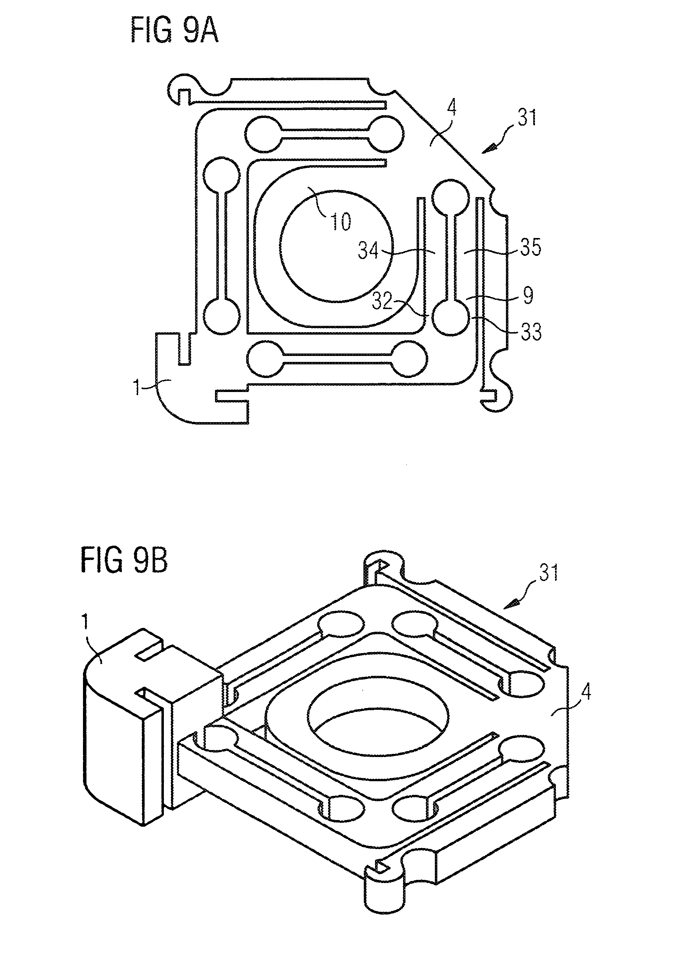

Figur 9 zeigt eine besonders vorteilhafte Variante des Antriebsmoduls. Diese Ausführungsform bietet gegenüber der in Figur 1 gezeigten Ausführung den Vorteil, dass der Abstand aller Drehpunkte benachbarter Stabelemente der Rahmenstruktur 31 - z. B. der Drehpunkte 32, 33 der Festkörpergelenke 9 benachbarter Stabelemente 34, 35 - vergrößert ist, ohne die axiale Steifigkeit der Stabelemente zu beeinträchtigen und ohne die Ausdehnung des Antriebsmoduls insgesamt zu beeinflussen. Durch diese Modifikation der Festkörpergelenke 9 wird eine deutlich gesteigerte Torsionssteifigkeit der Rahmenkonstruktion 31 bezüglich auf den Antriebsring 10 wirkender Drehmomente gegenüber derjenigen der Ausführungsform gemäß Figur 1 erzielt.

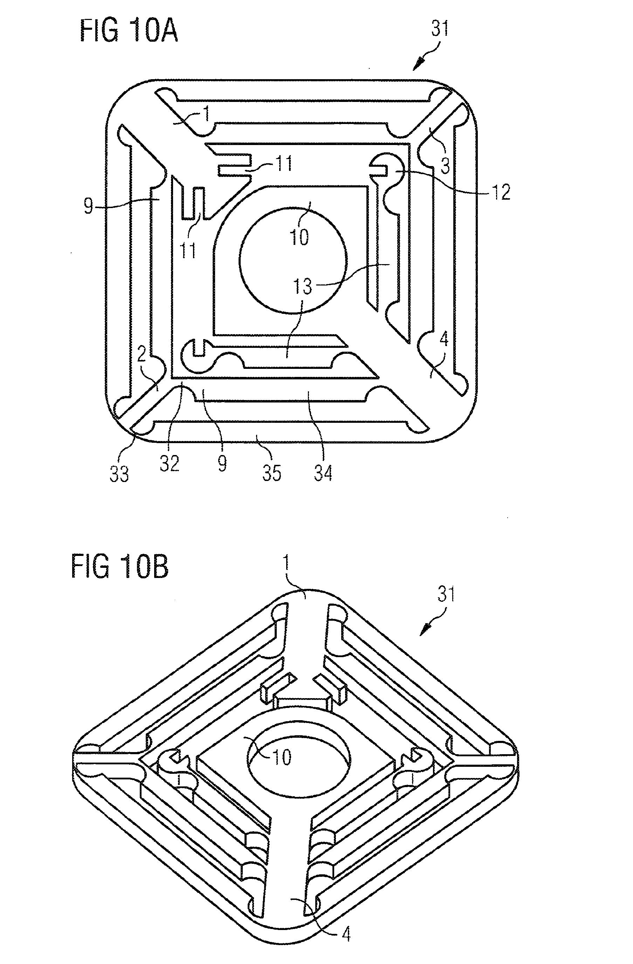

Figur 10A und 10B zeigen eine weitere Variante des Antriebsmoduls, bei dem die Biegewandler, im Gegensatz zu den zuvor dargestellten Ausführungsformen, nicht außerhalb sondern innerhalb der quadratischen Rahmenstruktur 31 angeordnet werden können. Dadurch kann insbesondere für kürzer dimensionierte Aktoren ein besonders kompakter Aufbau des Schrittantriebs realisiert werden. Die Eckelemente 1, 2, 3, 4 sind bei dieser Variante mehr oder weniger streifenförmig ausgebildet. Die Festkörpergelenke 32, 33 sind in der in Figur 9 beschriebenen, 'asymmetrischen' Ausführungsform realisierbar.

Mit Hilfe geeigneter elektrischer Ansteuerfunktionen vollziehen die Biegeaktoren 14, 15 jeweils an ihrem bewegten Ende 15a Auslenkungen mit sinus- bzw. kosinusförmigen zeitlichem Verlauf um die Ruhelage, wodurch die Abrollfläche der Ringbohrung 10a auf Anlage mit der Abrollfläche 30 der Welle 23 gehalten und in Form einer kreisförmigen Verschiebebewegung um die Abrollfläche 30 der Welle 23 bewegt wird und dadurch die Welle 23 in Rotation versetzt. Mittels der relativen Phasenlage der x- bzw. y-Auslenkungen des Antriebsringes 10 wird die Drehrichtung festgelegt und mit Hilfe der Steuerfrequenz die Drehgeschwindigkeit.

Im einfachsten Fall erfolgt die Kraftübertragung vom Antriebsring 10 auf die Welle 23 durch Reibung. Dabei kann es in Abhängigkeit vom auf die Welle 23 wirkenden Lastdrehmoment eines derartig aufgebauten Stellantriebs zu Schlupf kommen, wodurch die Genauigkeit des Stellantriebs reduziert wird. Der Schlupf wird vorzugsweise durch die Einführung eines Formschlusses zwischen den Abrollflächen von Antriebsring 10 und Welle 23 verringert, insbesondere indem auf die Innenfläche 10a des Antriebsrings 10 und auf die Außenfläche der Welle 23 eine Verzahnung aufgebracht wird. Dabei weisen Antriebsring 10 und Welle 23 vorzugsweise eine Zahndifferenz von mindestens eins auf. Das bedeutet, dass die Verzahnung der Innenflache des Antriebsrings 10 mindestens einen Zahn mehr als die Aufenzlache der Welle 23 umfasst. Werden Antriebsring 10 und Welle 2a innerhalb des Stellantriebs derart betrieben, dass die Verzahnung nicht außer Eingriff gerät, arbeitet der Stellantrieb idealerweise schlupffrei.

Als besonders bevorzugt wird eine zykloidische Verzahnung von Antriebsring 10 und Welle 23 angesehen. Bei der zykloidischen Verzahnung ist nahezu die Hälfte aller Zähne im Eingriff, wodurch ein hohes Drehmoment zwischen Antriebsring 10 und Welle 23 übertragbar ist. Über die Anzahl der auf der Innenfläche des Antriebsrings 10 und der Außenfläche der Welle 23 befindlichen Zähne ist zunächst eine Untersetzung des Stellantriebs 1 festgelegt, die typischerweise in einem Bereich von 20:1 bis 200:1 liegt. Um den Stellantrieb um nur einen Zahn weiter zu stellen, das heißt die Welle 23 durch den Antriebsring 10 um einen Zahn weiter zu drehen, muss vorzugsweise eine vollständige Periode des ansteuernden Sinussignals des Stellantriebs 1 durchlaufen werden. Da zum Weiterstellen um einen Zahn ein Zyklus des Ansteuersignals durchlaufen werden muss, zeichnet sich der Stellantrieb durch eine hohe Genauigkeit und durch eine hohe Wiederholgenauigkeit aus. Zudem wird über die Anzahl der Zähne und die Nutzung von einem Zyklus des Ansteuersignals pro Zahn eine hohe Winkelauflösung des Stellantriebs realisiert. Ergänzend dazu kann beliebig innerhalb einer Periode des Ansteuersignals interpoliert werden, um einen Mikroschrittbetrieb des Stellantriebs zu gewährleisten. Somit liefert der Stellantrieb gemäß bevorzugter Konstruktionen eine hohe Effizienz, eine hohe Untersetzung, ein hohes übertragbares Drehmoment basierend auf der Verzahnung von Antriebsring 10 und Welle 23, Schlupffreiheit bei der Übertragung des Drehmoments, eine beliebige Interpolation des Drehwinkels innerhalb eines Zahns der Welle 23 (Mikroschrittbetrieb), geringe Antriebsdrehmomentschwankungen (Ripple) und eine niedrige Zahnflankenbelastung für Antriebsring 10 und Welle 23, so dass ebenfalls der Verschleiß reduziert wird.

## Patentansprüche

1. Elektromechanischer Motor, insbesondere piezoelektrischer Mikroschrittantrieb, aufweisend:
- zwei elektromechanische Antriebselemente (14, 15), die annähernd senkrecht zueinander ausgerichtete Wirkrichtungen aufweisen,
- eine in einem Antriebsring (10) derart drehbar gelagerte Welle (23), dass der Antriebsring (10) durch eine Auslenkung der elektromechanischen Antriebselemente (14, 15) in die jeweilige Wirkrichtung zu einer unmittelbar auf die Welle (23) übertragbaren Verschiebebewegung anregbar ist, so dass die Welle (23) im Antriebsring (10) abrollt und dadurch rotiert, während
- die zwei elektromechanischen Antriebselemente (14, 15) über eine scherflexible und torsionssteife annähernd quadratische Rahmenstruktur (31) nichtradial an den innerhalb der quadratischen Rahmenstruktur (31) angeordneten und mit ihr steif verbundenen Antriebsring (10) angelenkt sind,
**dadurch gekennzeichnet , dass** die quadratische Rahmenstruktur (31) aus vier annähernd in den Ecken eines Quadrates angeordneten Eckelementen (1, 2, 3, 4) besteht, die jeweils durch ein Paar annähernd paralleler Stabelemente (5a, 5b, 6a, 6b, 7a, 7b, 8a, 8b) miteinander verbunden sind, wobei die Anbindung der Stabelemente an die Eckelemente jeweils durch ein Festkörpergelenk (9) erfolgt, und wobei ein Eckelement (4) steif mit dem Antriebsring (10) verbunden ist.

2. Elektromechanischer Motor nach Anspruch 1, bei dem die Festkörpergelenke (9) jeweils durch eine Querschnittsverjüngung der Stabelemente (5a, 5b, 6a, 6b, 7a, 7b, 8a, 8b) in einem kurzen Abschnitt gebildet sind.

3. Elektromechanischer Motor nach Anspruch 2, bei dem bei mindestens einem Paar von Querschnittsverjüngungen, die dem gleichen Paar von Stabelementen (34, 35) und dem gleichen Eckelement (1, 2, 3, 4) zugeordnet sind, mindestens eine der Eckelement (1, 2, 3, 4) zugeordnet sind, mindestens eine der Querschnittsverjüngungen des Paares in der Weise versetzt zur Mittelachse des jeweiligen Stabelements (34, 35) ausgebildet ist, dass der Abstand der durch die beiden Querschnittsverjüngungen des Paares gebildeten Drehpunkte (32, 33) gegenüber dem Abstand bei jeweils mittig angeordneten Querschnittsverjüngungen vergrößert ist.

4. Elektromechanischer Motor nach einem der Ansprüche 1 bis 3, bei dem das bewegte Ende (15a) je eines elektromechanischen Antriebselementes (14, 15) an je einem Nachbar-Eckelement (2, 3) des mit dem Antriebsring (10) verbundenen Eckelementes (4) angreift.

5. Elektromechanischer Motor nach einem der Ansprüche 1 bis 3, bei dem am mit dem Antriebsring (10) verbundenen Eckelement (4) zwei annähernd senkrecht zueinander angeordnete Zug-Druckstäbe (13) angebunden sind, die außerhalb oder innerhalb der quadratischen Rahmenstruktur (31) und parallel zu den jeweiligen, am genannten Eckelement (4) angebundenen, Stabelementen (6a, 6b, 7a, 7b) verlaufend sich mit ihren freien Enden jeweils mindestens bis in den Bereich eines dem genannten Eckelement (4) zugehörigen Nachbar-Eckelementes (2, 3) erstrecken, wobei das bewegte Ende (15a) je eines elektromechanischen Antriebselementes (14, 15) am freien Ende je eines Zug-Druckstabes (13) angreift.

6. Elektromechanischer Motor nach Anspruch 5, bei dem die Zug-Druckstäbe (13) jeweils zu ihren beiden Enden hin jeweils ein Festkörpergelenk (9) aufweisen.

7. Elektromechanischer Motor nach einem der Ansprüche 1 bis 6, dessen zwei elektromechanische Antriebselemente (14, 15) Biegewandler, vorzugsweise piezoelektrische Biegewandler, sind.

8. Elektromechanischer Motor nach Anspruch 7, bei dem die zwei Biegewandler (14, 15) außerhalb oder innerhalb der quadratischen Rahmenstruktur (31) und annähernd parallel zu den zwei Seiten der quadratischen Rahmenstruktur (31) angeordnet sind, die dem mit dem Antriebsring (10) verbundenen Eckelement (4) gegenüberliegen, wobei die Biegewandler (14, 15) jeweils mit ihrem bewegten Ende (15a) an das jeweilige Nachbar-Eckelement (2, 3) des mit dem Antriebsring (10) verbundenen Eckelementes (4), oder am freien Ende des jeweiligen Zug-Druckstabes (13) angreifen.

9. Elektromechanischer Motor nach Anspruch 8, bei dem das dem mit dem Antriebsring (10) verbundenen Eckelement (4) gegenüberliegende Eckelement (1) an einem Gehäuse (16) fixiert ist und zwei Aufnahmen (11) aufweist, die jeweils zur steifen Befestigung eines Biegewandlers (14, 15) an seinem ruhenden Ende vorgesehen sind.

10. Elektromechanischer Motor nach einem der Ansprüche 7 bis 9, bei dem die quadratische Rahmenstruktur (31) und der Antriebsring (10) ein einstückig in Kunststoffspritzgusstechnik gefertigtes Antriebsmodul bilden, wobei die Biegewandler (14, 15) mit in das Antriebsmodul eingespritzt sind.

11. Elektromechanischer Motor nach einem der Ansprüche 1 bis 10, bei dem ein annähernd quaderförmiges Gehäuse (16) mit einem Deckel (16b) vorgesehen ist, wobei im Gehäuse (16) ein zentraler Lagerblock (16a) mit einer Anlagefläche (21) und mit einer ersten Lagerbohrung (17) und im Deckel (16b) eine zweite Lagerbohrung (22) für die Welle (23) vorgesehen ist, und wobei ein zur Fixierung vorgesehenes Eckelement (1) der quadratischen Rahmenstruktur (31) derart in einer Gehäuseecke (20) angeordnet und steif und dauerfest fixiert ist, dass die mindestens eine zylindrische Abrollfläche (30) der Welle (23) in einer zugehörigen Abrollfläche einer Ringbohrung (10a) des Antriebsringes (10) abrollen kann.

12. Elektromechanischer Motor nach Anspruch 11, bei dem die Welle (23) mit einem scheibenförmigen Mittelstück ausgebildet ist, dessen erste ringförmige Stirnfläche auf dem Lagerblock (16a) aufliegt und dessen Mantelfläche die zylindrische Abrollfläche (30) der Welle (23) bildet.

13. Elektromechanischer Motor nach Anspruch 12, bei dem zur Sicherstellung der Fixierung in z-Richtung der Achse der Welle (23) eine mit einer Bohrung (25) zum Durchtritt der Welle (23) versehene Bügelfeder (24) vorgesehen ist, die sich einerseits auf der zweiten ringförmigen Stirnfläche des scheibenförmigen Mittelstücks der Welle (23) und andererseits bei aufgesetztem Deckel (16b) auf einer Fläche des Deckels (16b) so abstützt, dass die Drehung der Welle (23) nicht nennenswert behindert wird.

## Claims

1. Electromechanical motor, especially a piezoelectric microstepper drive, exhibiting:
- two electromechanical drive elements (14, 15) which exhibit effective directions aligned approximately perpendicularly to one another,
- a shaft (23) supported rotatably in a drive ring (10) in such a manner that the drive ring (10) can be activated by a deflection of the electomechanical drive elements (14, 15) into the respective effective direction to perform a displacement movement which can be transmitted directly to the shaft (23), in such a manner that the shaft (23) rolls in the drive ring (10) and as a result rotates, whilst
- the two electromechanical drive elements (14, 15) are hinged by a shear-flexible and torsionally rigid approximately square frame structure (31) nonradially to the drive ring (10) arranged inside the square frame structure (31) and rigidly connected to it
**characterized in that** the square frame structure (31) consists of four corner elements (1, 2, 3, 4) arranged approximately in the corners of a square, which are in each case connected to one another by a pair of approximately parallel rod elements (5a, 5b, 6a, 6b, 7a, 7b, 8a, 8b), the rod elements being linked to the corner elements in each case by means of a flexure hinge (9) and a corner element (4) being rigidly connected to the drive ring (10).

2. Electromechanical motor according to Claim 1, in which the flexure hinges (9) are in each case formed by a cross-sectional tapering of the rod elements (5a, 5b, 6a, 6b, 7a, 7b, 8a, 8b) in a short section.

3. Electromechanical motor according to Claim 2, in which, in at least one pair of cross-sectional tapers which are allocated to the same pair of rod elements (34, 35) and the same corner element (1, 2, 3, 4), at least one of the cross-sectional tapers of the pair is constructed offset to the center axis of the respective rod element (34, 35) in such a manner that the distance between the points of rotation (32, 33) formed by the two cross-sectional tapers of the pair is enlarged with respect to the distance of the cross-sectional tapers arranged in each case centrally.

4. Electromechanical motor according to one of Claims 1 to 3 in which the moving end (15a) of in each case one electromechanical drive element (14, 15) engages in each case one neighboring corner element (2, 3) of the corner element (4) connected to the drive ring (10).

5. Electromechanical motor according to one of Claims 1 to 3 in which at the corner element (4) connected to the drive ring (10), two tension-compression rods (13) arranged approximately perpendicularly to one another are linked which, outside or inside the square frame structure (31) and extending in parallel with the respective rod elements (6a, 6b, 7a, 7b) linked to said corner element (4), extend with their free ends in each case at least into the area of a neighboring corner element (2, 3) associated with said corner element (4), the moving end (15a) of in each case one electromechanical drive element (14, 15) engaging the free end of in each case one tension-compression rod (13).

6. Electromechanical motor according to Claim 5 in which the tension-compression rods (13) in each case have a flexure hinge (9) toward their two ends.

7. Electromechanical motor according to one of Claims 1 to 6, the two electromechanical drive elements (14, 15) of which are bending actuators, preferably piezoelectric bending actuators.

8. Electromechanical motor according to Claim 7, in which the two bending actuators (14, 15) are arranged outside or inside the square frame structure (31) or approximately in parallel with the two sides of the square frame structure (31) which are opposite the corner element (4) connected to the drive ring (10), the bending actuators (14, 15) in each case engaging with their moving end (15a) the respective neighboring corner element (2, 3) of the corner element (4) connected to the drive ring (10) or the free end of the respective tension-compression rod (13).

9. Electromechanical motor according to Claim 8, in which the corner element (1) opposite the corner element (4) connected to the drive ring (10) is fixed to a housing (16) and has two receptacles (11) which are in each case provided for the rigid attachment of a bending actuator (14, 15) at its resting end.

10. Electromechanical motor according to one of Claims 7 to 9, in which the square frame structure (31) and the drive ring (10) form a drive module fabricated in one piece in plastic injection-molding technique, the bending actuators (14, 15) also being injected into the drive module.

11. Electromechanical motor according to one of Claims 1 to 10, in which an approximately cuboidal housing (16) with a lid (16b) is provided, a central bearing block (16a) with a support surface (21) and with a first bearing bore (17) being provided in the housing (16) and a second bearing bore (22) for the shaft (23) being provided in the lid (16b) and a corner element (1) of the square frame structure (31), which corner element is provided for fixing, being arranged in a housing corner (20) and stiffly and permanently fixed in such a manner that the at least one cylindrical rolling area (30) of the shaft (23) can roll in an associated rolling area of an annular bore (10a) of the drive ring (10).

12. Electromechanical motor according to Claim 11, in which the shaft (23) is constructed with a disk-shaped centerpiece, the first annular front face of which rests on the bearing block (16a) and the surface area of which forms the cylindrical rolling area (30) of the shaft (23).

13. Electromechanical motor according to Claim 12, in which, to secure the fixing in the z direction of the axis of the shaft (23), a yoke spring (24) provided with a hole (25) for the passage of the shaft (23) is provided which is supported, on the one hand, on the second annular front face of the disk-shaped centerpiece of the shaft (23) and, on the other hand, with the lid (16b) in place, on an area of the lid (16b) in such a manner that the rotation of the shaft (23) is not significantly impeded.

## Revendications

1. Moteur électromécanique, notamment micro-entraînement pas à pas piézoélectrique, comprenant :
- deux éléments (14, 15) électromécaniques d'entraînement, qui ont des directions d'action dirigées à peu près perpendiculairement l'une à l'autre,
- un arbre (23) monté tournant dans un anneau (10) d'entraînement de manière à ce que l'anneau (10) d'entraînement puisse être, par une déviation des éléments (14, 15) électromécaniques d'entraînement dans la direction d'action respective, animé d'un mouvement de coulissement pouvant être transmis directement à l'arbre (23) de sorte que l'arbre (23) roule dans l'anneau (10) d'entraînement et ainsi tourne, tandis que
- les deux éléments (14, 15) électromécaniques d'entraînement sont, par une structure (31) de cadre à peu près carrée, souple au cisaillement et rigide à la torsion, articulés non radialement sur l'anneau (10) d'entraînement, disposé à l'intérieur de la structure (31) de cadre carrée et reliée rigidement à elle,
**caractérisé en ce que** la structure (31) de cadre carrée est constituée de quatre éléments (1, 2, 3, 4) de sommet, qui sont disposés aux sommets d'un carré, et qui sont reliés entre eux respectivement par une paire d'éléments (5a, 5b, 6a, 6b, 7a, 7b, 8a, 8b, 9a, 9b) de barre à peu près parallèles, la liaison des éléments de barre aux éléments de sommet s'effectuant respectivement par une articulation (9) à corps solide et un élément (4) de sommet étant relié rigidement à l'anneau (10) d'entraînement.

2. Moteur électromécanique suivant la revendication 1, dans lequel les articulations (9) à corps solide sont formées respectivement par un rétrécissement de section transversale des éléments (5a, 5b, 6a, 6b, 7a, 7b, 8a, 8b) de barre en un tronçon court.

3. Moteur électromécanique suivant la revendication 2, dans lequel, pour au moins une paire de rétrécissements de section transversale qui sont associés à la même paire d'éléments (34, 35) de barre et au même élément (1, 2, 3, 4) de sommet, au moins l'un des rétrécissements est associé à l'élément (1, 2, 3, 4) de sommet, au moins l'un des rétrécissements de section transversale de la paire est décalé par rapport à l'axe médian de l'élément (34, 35) de barre respectif de manière à ce que la distance entre les points (32, 33) de rotation formés par les deux rétrécissements de section transversale de la paire soit plus grande que la distance pour des rétrécissements de section transversale disposés respectivement au milieu.

4. Moteur électromécanique suivant l'une des revendications 1 à 3, dans lequel l'extrémité (15a) déplacée de respectivement un élément (14, 15) électromécanique d'entraînement attaque respectivement un élément (2, 3) de sommet voisin de l'élément (4) de sommet relié à l'anneau (10) d'entraînement.

5. Moteur électromécanique suivant l'une des revendications 1 à 3, dans lequel sur l'élément (4) de sommet relié à l'anneau (10) d'entraînement sont fixées deux barres (13) de traction pression, qui sont disposées à peu près perpendiculairement l'une à l'autre et qui en s'étendant à l'extérieur ou à l'intérieur de la structure (31) de cadre carrée et parallèlement aux éléments (6a, 6b, 7a, 7b) de barre respectifs reliés audit élément (4) de sommet, s'étendent, par leurs extrémités libres, respectivement au moins jusque dans la zone d'un élément (2, 3) de sommet voisin associé audit élément (4) de sommet, l'extrémité (15a) déplacée de respectivement un élément (14, 15) électromécanique d'entraînement attaquant l'extrémité libre de respectivement une barre (13) de traction-compression.

6. Moteur électromécanique suivant la revendication 5, dans lequel les barres (13) de traction-compression ont respectivement à leurs deux extrémités respectivement une articulation (9) à corps solide.

7. Moteur électromécanique suivant l'une des revendications 1 à 6, dont deux éléments (14, 15) électromécaniques d'entraînement sont des transducteurs de flexion, de préférence des transducteurs de flexion piézoélectriques.

8. Moteur électromécanique suivant la revendication 7, dans lequel deux transducteurs (14, 15) de flexion sont disposés à l'extérieur ou à l'intérieur de la structure (31) de cadre carrée et à peu près parallèlement aux deux côtés de la structure (31) de cadre carrée qui sont opposés à l'élément (4) de sommet relié à l'anneau (10) d'entraînement, les transducteurs (14, 15) de flexion attaquant respectivement, par leurs extrémités (15a) déplacées, l'élément (2, 3) de sommet respectivement voisin de l'élément (4) de sommet relié à l'anneau (10) d'entraînement ou l'extrémité libre de la barre (13) de traction-compression respective.

9. Moteur électromécanique suivant la revendication 8, dans lequel l'élément (1) de sommet opposé à l'élément (4) de sommet relié à l'anneau (10) d'entraînement est immobilisé dans un carter (16) et a deux logements (11) qui sont prévus respectivement pour la fixation rigide d'un transducteur (14, 15) de flexion à son extrémité au repos.

10. Moteur électromécanique suivant l'une des revendications 7 à 9, dans lequel la structure de cadre carrée et l'anneau (10) d'entraînement forment un module d'entraînement d'un seul tenant, fabriqué suivant la technique de moulage de matière plastique par injection, les transducteurs (14, 15) de flexion étant injectés dans le module d'entraînement.

11. Moteur électromécanique suivant l'une des revendications 1 à 10, dans lequel il est prévu un carter (16) à peu près carré, ayant un couvercle (16b), un bloc (16a) de central de palier, ayant une surface (21) d'application et un premier trou (17) de palier, étant prévu dans le carter (16) et un deuxième trou (22) de palier étant prévu pour l'arbre (23) dans le couvercle (16b) et dans lequel un élément (1) de sommet, prévu pour l'immobilisation, de la structure (31) de cadre carrée est disposé dans un coin (20) du carter et est immobilisé de manière rigide et durable, en ce que la au moins une surface (30) cylindrique de roulement de l'arbre (23) peut rouler dans une surface de roulement associée d'un trou (10a) annulaire de l'anneau (10) d'entraînement.

12. Moteur électromécanique suivant la revendication 11, dans lequel l'arbre (23) est formé par une pièce médiane en forme de disque, dont une première surface frontale annulaire s'applique au bloc (16a) de palier et dont la surface latérale forme la surface (30) cylindrique de l'arbre (23).

13. Moteur électromécanique suivant la revendication 12, dans lequel, pour assurer l'immobilisation dans la direction z de l'axe de l'arbre (23), il est prévu un ressort (24) en étrier, qui est muni d'un trou (25) pour le passage de l'arbre (23) et qui s'appuie d'une part sur la deuxième surface frontale annulaire de la pièce intermédiaire en forme de disque de l'arbre (23) et d'autre part, lorsque le couvercle (16b) est posé, sur une surface du couvercle (16b) de manière à ce que la rotation de l'arbre (23) de soit pas gênée de manière notable.
